# EUROPÄISCHE PATENTSCHRIFT

(11) **EP 1 028 325 B1**
(45) Veröffentlichungstag und Bekanntmachung des Hinweises auf die Patenterteilung: **21.10.2009**
(21) Anmeldenummer: 00890003.7
(22) Anmeldetag: 05.01.2000
(51) Int. Cl.: G01S 17/88, G01S 5/14, E01B 35/06

(54) **Verfahren zum Aufmessen eines Gleises**
Method of surveying a train track
Procédé pour surveiller les rails d'une voie ferrée

(30) Priorität: 12.02.1999 AT 20499
(43) Veröffentlichungstag der Anmeldung: 16.08.2000
(73) Patentinhaber: Franz Plasser Bahnbaumaschinen-Industriegesellschaft m.b.H., 1010 Wien (AT)
(72) Erfinder: Theurer, Josef, 1010 Wien (AT); Lichtberger, Bernhard, Dr., 4230 Pregarten (AT)

(56) Entgegenhaltungen:
- US-A- 3 821 933
- US-A- 5 077 557
- US-A- 5 301 548
- US-A- 5 493 499

## Beschreibung

Die Erfindung betrifft ein Verfahren zum Aufmessen eines Gleises mit zwei unabhängig voneinander verfahrbaren Meßfahrzeugen, wobei jeweils ein erstes, mobiles Meßfahrzeug an einem der beiden Endpunkte eines zu vermessenden Gleisabschnittes positioniert und das während des Meßvorganges stationäre, zweite Meßfahrzeug bezüglich seiner Ortsposition koordinatenmäßig bestimmt und eine Bezugsgerade in Form eines optischen Meßstrahls zwischen den beiden Meßfahrzeugen positioniert wird, wonach das erste Meßfahrzeug in Richtung zum gegenüberliegenden stationären Meßfahrzeug verfahren und jede Lageveränderung einer Empfangseinheit des ersten Meßfahrzeuges in Relation zur Bezugsgeraden als Korrektur-Meßwert registriert wird.

Ein derartiges Verfahren wird in dem Artikel "Einsatzerfahrungen mit dem Gleisvormeßwagen EM-SAT" in der Fachzeitschrift "Der Eisenbahningenieur", 46 (1995) 5, Seiten 314 bis 318, näher beschrieben. Der Ablauf der Messung erfolgt in zyklischer Weise. Das während der Gleisaufmessung stationäre und mit einem Lasersender ausgestattete Meßfahrzeug (auch als Satellit bezeichnet) wird in Arbeitsrichtung bis zu einem nächstfolgenden, geodätisch vermessenen Festpunkt verfahren, der sich im Normalfall auf einem Fahrleitungsmasten befindet. Der Lasersender wird bezüglich des in Gleisquerrichtung angrenzenden Festpunktes eingerichtet, und damit in eine exakte Soll-Position gebracht. Anschließend wird der Lasersender mit Hilfe eines an diesem befestigten Fernrohres auf einen auf dem mobilen Meßfahrzeug (bzw. Hauptmaschine) befindlichen Empfänger eingerichtet. Das mobile Meßfahrzeug steht dabei mit der Meßachse exakt an einem Festpunkt, der zuvor mit Hilfe von Farbe am Schienenfuß gekennzeichnet worden ist. Diese exakte Positionierung wird durch eine Videokamera, die den Schienenfuß und das Rad der Meßachse zeigt, erleichtert.

Die eigentliche Aufmessung des Gleisabschnittes wird mit der Vorfahrt des mobilen Gleisfahrzeuges eingeleitet, wobei die Position des Laserstrahles relativ zur Gleis-Ist-Lage in Abständen von 20 Zentimeter gemessen und gespeichert wird. Mit Hilfe eines speziellen Computerprogrammes können aus den Geometriedaten in einem Gleisvermarkungsplan die Soll-Pfeilhöhen für Richtung und Höhe berechnet werden. Es ist dazu lediglich die Eingabe der Gleisgeometrie und die Lage der Festpunkte notwendig. Diese Werte dienen für den Vergleich mit den gemessenen Pfeilhöhen, wobei deren Differenz die Korrekturwerte für Höhe und Richtung ergeben. Die Aufmessung des Gleisabschnittes ist beendet, sobald das mobile Meßfahrzeug das stationäre Meßfahrzeug erreicht hat. Während das stationäre Meßfahrzeug zur Durchführung des nächsten Meßvorganges zum nächstfolgenden Festpunkt vorgefahren wird, erfolgt eine Berechnung der Verschiebe- und Hebewerte für den aufgemessenen Gleisabschnitt. Die ermittelten Korrekturwerte können auf Diskette gespeichert werden, um sie beispielsweise in einer Stopfmaschine einzulesen und für die genaue Gleislagekorrektur automatisch abzuarbeiten.

Durch US 5 493 499 ist ein weiteres Verfahren zum Aufmessen eines Gleises bekannt, wobei zwei gleisverfahrbare Meßeinheiten an beiden Endpunkten eines zu vermessenden Gleisabschnittes aufgestellt und ihre jeweilige Position in bezug auf den Gleisfestpunkt definiert wird. Anschließend wird eine der beiden Meßeinheiten schrittweise in Richtung zur anderen Meßeinheit verfahren, wobei bei jeder Fahrtunterbrechung zur Durchführung eines Meßvorganges ein Vergleich der Meßdaten der Gleis-Ist-Lage mit den Meßdaten der Soll-Lage durchgeführt, ein entsprechender Differenzwert errechnet und abgespeichert wird. Dabei wird durch Empfang eines Positionstelegrammes von Vermessungssatelliten (GPS) die Position der beiden Meßeinheiten relativ zueinander in einem Koordinatensystem bestimmt. Bei jeder Fahrtunterbrechung der zweiten Meßeinheit bei deren Meßfahrt in Richtung zur gegenüberliegenden Meßeinheit wird durch Empfang eines weiteren Positionstelegrammes von Vermessungssatelliten die jeweilige relative Positionsveränderung eruiert.

Nähere Details zu den genannten Verfahren für die Gleisaufmessung sind auch in einem Artikel "Stand der Langsehnenvermessung mittels EM-SAT oder GPS" in der Fachzeitung "Der Eisenbahningenieur" 46 (1995) 8, Seiten 560 bis 563 beschrieben.

Gemäß einem Artikel "GPS-based data collection" in der Zeitschrift "Railway Age", Dezember 1994, Seiten 66 und 67, ist es bekannt, GPS zur Ermittlung von Gleisabschnitten einzusetzen, die eine Durcharbeitung erfordern.

Schließlich wird durch US 4 812 991 ein Verfahren und eine Vorrichtung zur raschen und genauen Bestimmung der koordinatenmäßigen Position eines bewegbaren Empfängers relativ zu einem fix installierten Empfänger beschrieben.

Die Aufgabe der vorliegenden Erfindung liegt nun in der Schaffung eines eingangs näher beschriebenen Verfahrens, das unter Beibehaltung einer hohen Meßgenauigkeit einen rascheren Arbeitsfortschritt ermöglicht.

Erfindungsgemäß wird diese Aufgabe mit einem Verfahren der gattungsgemäßen Art dadurch gelöst, daß zu Beginn jedes Meßzyklus durch Einsatz eines GPS-Empfängers die relative Position des stationären Meßfahrzeuges in bezug auf eine, in einem terrestrischen Koordinatensystem bekannte, dem aufzumessenden Gleisabschnitt benachbarte, örtlich fest installierte GPS-Referenzstation ermittelt und unter Zugrundelegung der ermittelten Positionsdaten die Bezugsgerade auf das mobile Meßfahrzeug eingerichtet und die Gleisaufmessung durch Vorfahrt des mobilen Meßfahrzeuges durchgeführt wird.

Ein derartiges Meßverfahren hat den besonderen Vorteil, daß die zeitaufwendige Einmessung des Lasersenders auf einen benachbarten Festpunkt entfällt. Außerdem erübrigt sich damit auch das ebenfalls zeitaufwendige Positionieren beider Meßfahrzeuge jeweils am Beginn bzw. Ende des zu vermessenden Gleisabschnittes. Weiters können die Gleisabschnitte unter Vermeidung eines Polygonzuges überschneidend aufgemessen werden. Schließlich sind die aufgemessenen Lagedaten auch in vorteilhafter Weise zur Schaffung eines koordinatenmäßig exakt definierten Gleislageplanes verwendbar.

Im folgenden wird die Erfindung anhand eines in der Zeichnung dargestellten Ausführungsbeispieles näher beschrieben.

Es zeigen:
Fig. 1 eine Seitenansicht zweier Meßfahrzeuge zur Aufmessung eines Gleisabschnittes,
Fig. 2 eine schematische Darstellung einer Gleis-Soll-Lage und einer durch einen Laserstrahl der beiden Meßfahrzeuge gebildeten Bezugsgeraden, und
Fig. 3 bis 5 jeweils eine stark vereinfachte Darstellung der unterschiedlichen Positionen der beiden Meßfahrzeuge während der Gleisaufmessung.

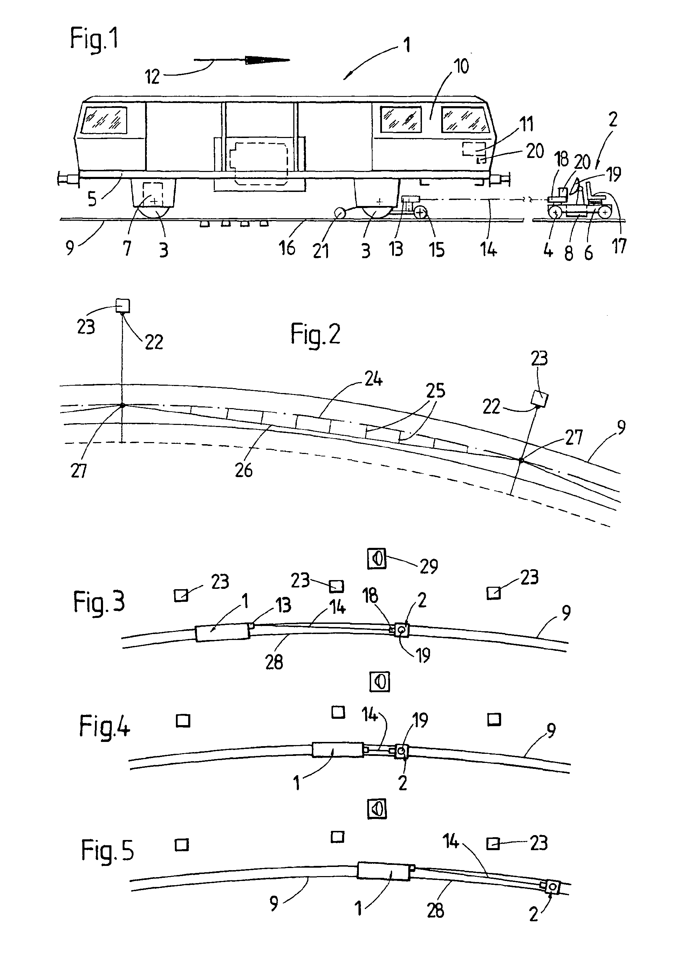

Eine in Fig. 1 ersichtliche Hauptmaschine wird im folgenden als mobiles Meßfahrzeug 1 bezeichnet, da dieses während der Gleisaufmessung relativ zu einem zweiten, stationären Meßfahrzeug 2, auch als Satellit bezeichnet, bewegt wird. Beide Meßfahrzeuge 1,2 weisen einen auf Fahrwerken 3,4 abgestützten Maschinenrahmen 5,6 auf und sind jeweils durch einen eigenen Fahrantrieb 7,8 unabhängig voneinander auf einem Gleis 9 verfahrbar. In einer Fahrkabine 10 des mobilen Meßfahrzeuges 1 befindet sich eine Steuerund Recheneinheit 11. Mit einem Pfeil 12 ist die Arbeitsrichtung des mobilen Meßfahrzeuges 1 während der Gleisaufmessung angezeigt. Außerhalb der beiden Fahrwerke 3,4 unterhalb des vorderen Maschinenendes befindet sich eine aus einem schnellen Bildauswertungssystem gebildete Empfangseinheit 13 zum Lokalisieren einer aus einem Laserstrahl gebildeten Bezugsgeraden 14. Die an einem Ende gelenkig am Maschinenrahmen 5 befestigte Empfangseinheit 13 stützt sich über Spurkranzrollen 15 auf Schienen 16 des Gleises 9 ab.

Das zur Aufnahme einer Bedienungsperson mit einer Sitzgelegenheit 17 ausgestattete stationäre Meßfahrzeug 2 weist einen durch Antriebe verstellbar am Maschinenrahmen 6 gelagerten Sender 18 in Form eines DiodenLasers auf. Zum Empfang von Positionsdaten in Verbindung mit dem bekannten Global Positioning System ist auch ein GPS-Empfänger 19 auf dem stationären Meßfahrzeug 2 angeordnet. Zur Datenübertragung zwischen den beiden Meßfahrzeugen 1,2 an die Steuer- und Recheneinheit 11 sind Funkeinheiten 20 vorgesehen. Für die Wegmessung ist ein Wegmesser 21 am mobilen Meßfahrzeug 1 positioniert.

In Fig. 2 ist die Definition der Soll-Lage des Gleises 9 vereinfacht dargestellt. Das Gleis 9 ist in einem Gleisvermarkungsplan koordinatenmäßig exakt in bezug auf Festpunkte 22 definiert, die auf Fahrleitungsmasten 23 befestigt sind. Durch eine strichpunktierte Linie 24 ist die Gleismitte angedeutet. Die Gleislage wird durch im Abstand von fünf Meter zueinander befindliche Pfeilhöhen 25 definiert. Eine die Basis für die Pfeilhöhen 25 bildende Sehne 26 wird durch Soll-Punkte 27 bestimmt, die sich im Soll-Abstand zu den genannten Festpunkten 22 befinden.

Bei dem bekannten, eingangs erwähnten Verfahren zur Gleisaufmessung mittels eines EM-SAT wird der Sender 18 des stationären Meßfahrzeuges 2 exakt auf den Soll-Punkt 27 eingerichtet, um unter Zuhilfenahme des Laserstrahles als Bezugsgerade 14 eine Basis für die Pfeilhöhen 25 zu bilden. Für diese genaue Einmessung des Senders 18 mußte eine Vermessungsgruppe vor der Gleisaufmessung entsprechende Meßarbeiten unter Einbeziehung der gegenüberliegenden Festpunkte 22 durchführen, wobei die Meßergebnisse beispielsweise auf den Schwellen aufgeschrieben wurden. Es ist aber auch möglich, diese Einmessung des Senders 18 mit Hilfe eines auf diesem befestigten Zielfernrohres durchzuführen, was naturgemäß mit einem entsprechenden Zeitaufwand verbunden ist und außerdem eine genaue Positionierung des mobilen Meßfahrzeuges 1 am zuvor eingemessenen Soll-Punkt 27 erforderlich macht.

Im folgenden wird das neue, erfindungsgemäße Verfahren zur Aufmessung eines Gleisabschnittes 28 insbesondere anhand der Fig. 3 bis 5 näher beschrieben.

Zu Beginn der Gleisaufmessung wird das stationäre Meßfahrzeug 2 in den Bereich des aufzumessenden Gleisabschnittes 28 hineinverfahren und gestoppt, sobald die witterungsabhängige Distanzgrenze zum Empfang des Laserstrahles bzw. der Bezugsgeraden 14 erreicht ist. Durch Aktivierung des GPS-Empfängers 19 werden die Positionsdaten des stationären Meßfahrzeuges 2 empfangen und hinsichtlich der bekannten Positionsdaten einer in der Nähe des Gleises 9 befindlichen, ortsfest installierten GPS-Referenzstation 29 relativiert. Da die GPS-Referenzstation 29 in einem terrestrischen Koordinatensystem koordinatenmäßig genau bekannt ist, kann auch die koordinatenmäßige Position des stationären Meßfahrzeuges 2 im Koordinatensystem genau eruiert und mittels der Funkeinheit 20 an die Steuer- und Recheneinheit 11 übermittelt werden. In dieser werden sofort die Positionsdaten mit den gespeicherten Sollwertdaten verglichen und eine eventuelle Differenz bei der folgenden Aufmessung berücksichtigt.

Nach Errichtung der Bezugsgeraden 14 durch Einstellung des Laserstrahles des Senders 18 auf die Empfangseinheit 13 wird durch Vorfahrt des mobilen Meßfahrzeuges 1 die Aufmessung des Gleisabschnittes 28 eingeleitet. Dabei erfolgt in Abständen von 20 Zentimeter die Messung der Position der Bezugsgeraden 14 relativ zur Gleis-Ist-Lage, die durch die Spurkranzrollen 15 auf die Empfangseinheit 13 übertragen wird. In Verbindung mit der Wegmessung durch den Wegmesser 21 erfolgt eine ortsabhängige Speicherung der durch die Differenzbildung zwischen Soll- und Ist-Werten gebildeten Korrektur-Meßwerte.

In Fig. 4 ist das Ende des Meßzyklus dargestellt, bei dem das mobile Meßfahrzeug 1 im Rahmen der Aufmessung das stationäre Meßfahrzeug 2 erreicht hat. Durch Vorfahrt des stationären Meßfahrzeuges 2 wird der nächste Meßzyklus eingeleitet (Fig. 5).

## Patentansprüche

1. Verfahren zum Aufmessen eines Gleises (9) mit zwei unabhängig voneinander verfahrbaren Meßfahrzeugen (1,2), wobei jeweils ein erstes, mobiles Meßfahrzeug (1) an einem der beiden Endpunkte eines zu vermessenden Gleisabschnittes (28) positioniert und das während des Meßvorganges stationäre, zweite Meßfahrzeug (2) bezüglich seiner Ortsposition koordinatenmäßig bestimmt und eine Bezugsgerade (14) in Form eines optischen Meßstrahls zwischen den beiden Meßfahrzeugen (1,2) positioniert wird, wonach das erste Meßfahrzeug (1) in Richtung zum gegenüberliegenden stationären Meßfahrzeug (2) verfahren und jede Lageveränderung einer Empfangseinheit (13) des ersten Meßfahrzeuges (1) in Relation zur Bezugsgeraden (14) als Korrektur-Meßwert registriert wird, **dadurch gekennzeichnet, daß** zu Beginn jedes Meßzyklus durch Einsatz eines GPS-Empfängers (19) die relative Position des stationären Meßfahrzeuges (2) in bezug auf eine, in einem terrestrischen Koordinatensystem bekannte, dem aufzumessenden Gleisabschnitt (28) benachbarte, örtlich fest installierte GPS-Referenzstation (29) ermittelt und unter Zugrundelegung der ermittelten Positionsdaten die Bezugsgerade (14) auf das mobile Meßfahrzeug (1) eingerichtet und die Gleisaufmessung durch Vorfahrt des mobilen Meßfahrzeuges (1) durchgeführt wird.

## Claims

1. A method of surveying a track (9) with two measuring vehicles (1, 2) designed to travel independently of one another, wherein in each case a first, mobile measuring vehicle (1) is positioned at one of the two end points of a track section (28) to be surveyed and the coordinates of the local position of the second measuring vehicle (2) which is stationary during the measuring operation are determined and a reference line (14) in the form of an optical measuring beam is positioned between the two measuring vehicles (1, 2), after which the first measuring vehicle (1) is moved in the direction towards the opposite stationary measuring vehicle (2) and any change in position of a receiving unit (13) of the first measuring vehicle (1) relative to the reference line (14) is registered as a correction measurement value, **characterized in that**, at the start of each measuring cycle, the relative position of the stationary measuring vehicle (2) with reference to a fixedly installed GPS reference station (29) is determined by using a GPS receiver (19), the said GPS reference station being known within a terrestrial coordinate system and being adjacent to the track section (28) to be surveyed, and the reference line (14) is aligned with the mobile measuring vehicle (1) on the basis of the determined position data, and the track surveying operation is carried out by advancing the mobile measuring vehicle (1).

## Revendications

1. Procédé pour mesurer une voie ferrée (9) comprenant deux véhicules de mesure (1, 2) déplaçables indépendamment l'un de l'autre, un premier véhicule de mesure mobile (1) étant positionné à chaque fois à un des deux points d'extrémité d'une section de voie (28) à mesurer et le second véhicule de mesure (2) stationnaire pendant le processus de mesure étant déterminé du point de vue des coordonnées par rapport à sa position locale et une droite de référence (14) étant positionnée sous la forme d'un rayon de mesure optique entre les deux véhicules de mesure (1, 2), après quoi le premier véhicule de mesure (1) est déplacé en direction du véhicule de mesure stationnaire opposé (2) et chaque modification de position d'un module de réception (13) du premier véhicule de mesure (1) est enregistrée en relation avec des droites de référence (14) en tant que valeur mesurée de correction, **caractérisé en ce que** la position relative du véhicule de mesure stationnaire (2) est déterminée au début de chaque cycle de mesure par l'utilisation d'un récepteur GPS (19) par rapport à une station de référence GPS (29) installée de manière localement fixe, voisine de la section de voie (28) à mesurer, connue dans un système de coordonnées terrestre et la droite de référence (14) est installée sur le véhicule de mesure mobile (1) à partir des données de position déterminées et la mesure de la voie est réalisée par l'avance du véhicule de mesure mobile (1).
